Europäisches Patentamt

European Patent Office

Office européen des brevets

(19)

(11) EP 0 863 066 A1

(12) EUROPEAN PATENT APPLICATION

(43) Date of publication:
09.09.1998 Bulletin 1998/37

(51) Int. Cl.$^6$: B62D 33/06

(21) Application number: 97830100.0

(22) Date of filing: 07.03.1997

(84) Designated Contracting States:
AT BE CH DE DK ES FI FR GB GR IE IT LI LU MC
NL PT SE
Designated Extension States:
AL LT LV RO SI

(71) Applicant:
SAME DEUTZ-FAHR S.P.A.
24047 Treviglio (Bergamo) (IT)

(72) Inventors:
• Paggi, Bruno
24047 Treviglio (Bergamo) (IT)
• Ribaldone, Massimo
24047 Pontirolo Nuovo (Bergamo) (IT)

(74) Representative:
Quinterno, Giuseppe et al
c/o JACOBACCI & PERANI S.p.A.
Corso Regio Parco, 27
10152 Torino (IT)

(54) **An agricultural tractor with self-levelling pneumatic suspension for the driver's cab**

(57)     An agricultural tractor comprises a rigid chassis (12) carrying a driver's cab (14). The tractor comprises a suspension system (18) disposed between the cab and the chassis and comprising:

-     an air spring (20),

-     a distance sensor (24) for detecting the distance between the cab (14) and the chassis (12), and

-     means for varying the amount of air contained in the spring (20) in dependence on the distance detected by the sensor (24).

EP 0 863 066 A1

## Description

The present invention relates to an agricultural tractor comprising a rigid chassis carrying a driver's cab.

The object of the present invention is to improve the comfort of an agricultural tractor with respect to vibrations by reducing the accelerations which the chassis transmits to the cab and hence to the operator both during movement on the road and when working in fields.

According to the present invention, this object is achieved by the provision of an agricultural tractor comprising a suspension system operatively disposed between the cab and the chassis and comprising at least one air spring, a distance sensor for detecting the distance between the cab and the chassis, and means for varying the amount of air contained in the air spring in dependence on the distance detected by the sensor.

The suspension according to the present invention maintains a constant height of the cab relative to the chassis. The cab thus always has the same suspension travel, regardless of the weight and of the number of people on board.

The suspension system according to the present invention maintains a constant natural frequency of oscillation of the cab regardless of the weight carried. It is thus possible to select a very low oscillation frequency (for example, of the order of 1.6 Hz) at the design stage, which improves vibrational comfort without the suspension coming to its travel limit when the weight in the cab increases.

In comparison with the use of metal springs with constant stiffness, the system according to the invention maintains a lower and constant natural frequency, improving the comfort of the operator and of any passengers. The system according to the invention also reduces the noise induced during working in fields by the knocking of the cab against the silent-block travel-limit stops.

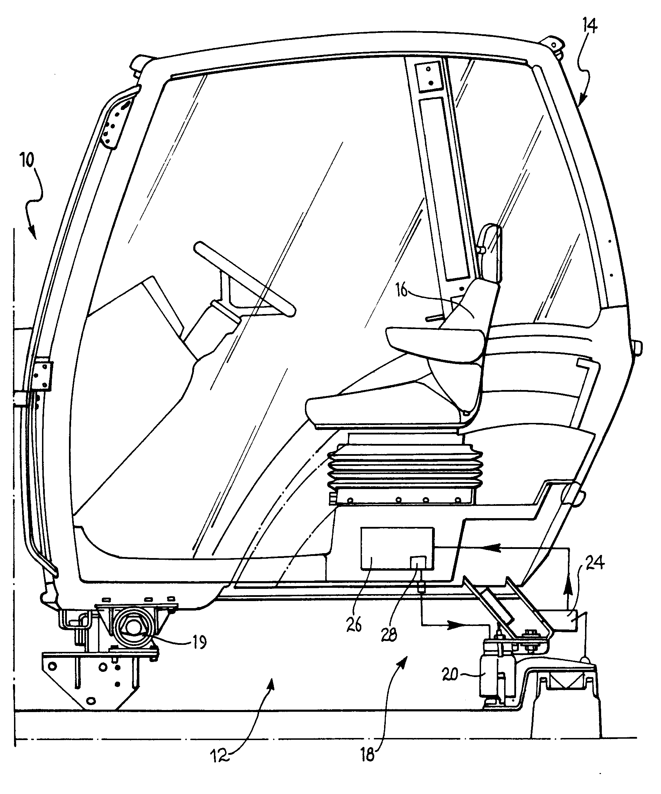

Further characteristics and advantages of the present invention will become clear in the course of the following detailed description, given purely by way of non-limiting example, with reference to the appended drawing which is a schematic partial side elevational view of an agricultural tractor provided with a pneumatic suspension system according to the invention.

With reference to the drawing, an agricultural tractor, indicated 10, has a rigid chassis 12 carrying, in known manner, the engine, the transmission members and the driving and steerable wheels.

A driver's cab 14, in which a seat 16 and the devices for driving and operating the tractor, such as the steering wheel, the gear-change lever, etc. (not shown), are situated, is mounted on the chassis 12.

The cab 14 is connected to the chassis 12 in a floating manner and a suspension system 18 is operatively interposed between the cab 14 and the chassis. In the embodiment illustrated in the drawing, the cab 14 is articulated to the chassis at the front about a transverse axis, indicated 19. The suspension system 18 comprises at least one air spring 20 interposed between the cab and the chassis 12. The suspension system 18 also comprises a distance sensor 24 for measuring the distance between the cab 14 and the chassis 12, and a supply system for the spring or springs.

The distance sensor 24 generates a signal indicative of the distance between the cab and the chassis. As will be explained further below, this distance measurement is made in static conditions, that is, in the absence of relative oscillations between the cab and the chassis. The signal coming from the distance sensor 24 is sent to a control valve 28 which varies the quantity of air contained in the spring 20 in dependence on the signals coming from the distance sensor 24.

The quantity of air contained in the spring is varied solely in the presence of a distance between the cab and the chassis having a zero oscillation frequency (static conditions), in fact, the distance sensor functions only statically, that is, when the tractor is not subject to vibrations. The sensor 24 in fact becomes insensitive to changes in distance between the cab and the chassis if these distance variations have an oscillation frequency other than zero. The jolting of the cab due to movement on the road or to working in the fields does not therefore cause any variation in the operative characteristics of the spring 20. On the other hand, when there is a change in the distance between the cab and the chassis in static conditions due to one or more people getting in or out, the distance sensor 24 detects the distance between the cab and the chassis and compares it with a predetermined reference value.

If the distance measured is less than the predetermined distance, the system inflates the air spring 20 until the predetermined distance value is re-established. This situation occurs when there is an increase in the weight of the cab (one or more people getting in). If, on the other hand, the distance measured by the sensor 24 is greater than the predetermined distance, the solenoid valve 28 is opened and discharges the excess air from the air spring into the atmosphere until the desired height of the cab is reached. This latter situation occurs when one or more people get out of the cab, causing the overall weight of the cab to decrease.

The sensor 24 thus causes the distance of the cab 14 from the chassis 12 to remain constant regardless of the weight of and the number of people in the cab. This ensures a constant suspension travel regardless of the load conditions. The sensor 24 used in the system according to the invention is of known type. A sensor having the necessary characteristics is marketed, for example, with the code K7 by the firm WABCO, but sensors of other types suitable for the purpose are also available on the market.

The suspension system 18 achieves a constant natural oscillation frequency of the cab regardless of its weight. In fact, the natural oscillation frequency of the cab is expressed, as a first approximation which does not take account of damping, by an equation such as:

$$f = \frac{1}{2}\pi \cdot \sqrt{\frac{K}{m}}$$

in which K is the stiffness of the spring and m is the overall mass of the cab which bears on the suspension. If the distance between the cab and the chassis is kept constant as explained above, the stiffness K of the air spring 20 varies in inverse proportion to the overall mass of the cab 14 and the ratio K/m therefore remains constant. It is consequently possible to select, at the design stage, a very low natural oscillation frequency, for example, of the order of 1.6 Hz, which improves comfort without the cab 14 coming to its travel limit in dynamic conditions or when the weight of the cab increases in static conditions.

It would not be possible to keep the natural oscillation frequency constant with a metal spring of constant stiffness. In fact, when the operator gets in, the natural oscillation frequency of the cab decreases and, at the same time, the suspension travel is reduced. If the spring were too flexible there would therefore be a danger of the travel-limit position being reached during springing, which would nullify the effect of the suspension.

There are several possible variants of the supply system for the air spring (or springs).

A first variant provides for the use of a motor-driven air-compressor unit 26 with an integral solenoid valve 28 and filter. In this case, the distance sensor 24 switches on the motor-driven compressor unit 26 if the spring 20 is to be inflated and opens the solenoid valve 28 if the cab is to be lowered.

A second variant provides for the use of a motor-driven compressor unit with a reservoir and two solenoid valves. In this case, the air for supplying the springs is drawn from the reservoir. The distance sensor activates two solenoid valves alternatively, a first valve controlling the admission of air to the springs from the reservoir and the second valve exhausting the excess air from the springs when the cab is to be lowered. As an alternative to this control system, it is possible to use mechanical distance sensors which, instead of controlling solenoid valves electrically, directly supply or exhaust the air of the air springs. These sensors are constituted, in practice, by a valve which isolates the air springs from the rest of the system when the cab is at the correct level and which puts the spring into communication with the supply system or with the exhaust when the spring is to be inflated or deflated. Sensors of this type are produced, for example, by Wabco. The motor-driven compressor unit is controlled by a pressure switch which is disposed on the reservoir and causes the motor-driven compressor to start and stop on the basis of the pressure in the reservoir.

A third variant provides for the use of two solenoid valves, as in the embodiment described above, but without the motor-driven compressor unit. This is for tractors with pneumatic braking systems. The compressor takes the drive from the tractor engine. The height adjustment system is the same as in the embodiment described above.

The diagram of the suspension system indicated in the drawing is given purely by way of illustrative example. The number of air springs may vary from one to four according to need. Hydraulic shock-absorbers may be provided in parallel with the air springs for damping the oscillatory motion of the cab.

**Claims**

1. An agricultural tractor comprising a rigid chassis (12) carrying a driver's cab (14), characterized in chat it comprises a suspension system (18) operatively disposed between the cab (14) and the chassis (12) and comprising:

   - at least one air spring (20),

   - at least one distance sensor (24) for detecting the distance between the cab (14) and the chassis (12), and

   - means (26, 28) for varying the amount of air contained in the air spring (20) in dependence on the distance detected by the sensor (24).

2. A tractor according to Claim 1, characterized in that the suspension system (18) is arranged to vary the amount of air contained in the spring (20) solely in the presence of a distance between the cab (14) and the chassis (12) having a zero oscillation frequency.

3. A tractor according to Claim 2, characterized in that the distance sensor (24) is insensitive to changes in the distance between the cab (14) and the chassis (12) with oscillation frequencies other than 0.

4. A tractor according to Claim 3, characterized in that the suspension system (18) is arranged to keep the distance between the cab (14) and the chassis (12), measured in static conditions, substantially constant.

5. A tractor according to Claim 4, characterized in that the distance sensor (24) is arranged to compare the distance between the cab (14) and the chassis (12), measured in static conditions, with a predetermined reference value and to bring about an increase in the amount of air contained in the spring (20) if the distance measured is less than the reference value and to bring about a reduction in the amount of air contained in the spring (20) if the distance measured is greater than the reference value.

6. A tractor according to Claim 5, characterized in that the suspension system (18) comprises a motor-driven air-compressor unit (26) for introducing air into the spring (20) and a solenoid valve (28) for discharging air from the spring (20).

7. A tractor according to Claim 5, characterized in that the suspension system comprises a compressed-air reservoir and at least two valves for supplying air to the spring (20) and for discharging air from the spring, respectively.

8. A tractor according to Claim 8, characterized in that the valves are integral with the distance sensor (24).

9. A tractor according to any one of the preceding claims, characterized in that the suspension system (18) comprises at least one hydraulic shock-absorber arranged in parallel with the air spring (20).

European Patent Office

**EUROPEAN SEARCH REPORT**

Application Number

EP 97 83 0100

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | CA 1 264 345 A (GINGRAS ALAIN;RIVARD JEAN MARC) 9 January 1990 * claim 1 * | 1,4,5,9 | B62D33/06 |
| A | | 6 | |
| A | US 3 966 009 A (MEACOCK II LESLIE A ET AL) 29 June 1976 * column 2, line 53 - line 62 * | 2,3,6,7 | |
| A | DE 43 21 152 A (KLOECKNER HUMBOLDT DEUTZ AG) 5 January 1995 * the whole document * | 1 | |
| A | US 4 871 189 A (VAN BREEMEN CHARLES A) 3 October 1989 * column 2, line 37 - line 40 * | 8 | |
| A | US 5 603 387 A (BEARD ANDREW M  ET AL) 18 February 1997 * column 5, line 50 - line 61 * | 1 | |
| A | EP 0 089 794 A (LUCAS IND PLC) 28 September 1983 * the whole document * | 1 | TECHNICAL FIELDS SEARCHED     (Int.Cl.6)<br><br>B62D |
| A | US 5 299 651 A (WILSON B LEE) 5 April 1994 * claim 1 * | 1 | |

The present search report has been drawn up for all claims

| Place of search | Date of completion of the search | Examiner |
|---|---|---|
| THE HAGUE | 28 August 1997 | Pemberton, P |